# EUROPÄISCHE PATENTSCHRIFT

(11) **EP 1 245 640 B1**
(45) Veröffentlichungstag und Bekanntmachung des Hinweises auf die Patenterteilung: **28.11.2007**
(21) Anmeldenummer: 01106556.2
(22) Anmeldetag: 15.03.2001
(51) Int. Cl.: C08L 77/00

(54) **Gefüllte, thermoplastische Polyamidformmassen mit verbesserten Eigenschaften**
Filled thermoplastic moulding compositions
Compositions pour moulage à partir de polyamide thermoplastique chargé

(43) Veröffentlichungstag der Anmeldung: 02.10.2002
(73) Patentinhaber: EMS-Chemie AG, 7013 Domat/Ems (CH)
(72) Erfinder: Ebert, Martina Dr. rer.nat., 7013 Domat/Ems (CH); Fürst, Reinhard, 7000 Chur (CH); Felsberger, Franz, Eccleshall, Stafford ST21 6DZ (GB)
(74) Vertreter: Becker Kurig Straus

(56) Entgegenhaltungen:
- EP-A- 0 532 963
- EP-A- 0 728 812
- EP-A- 1 018 534
- DATABASE WPI Section Ch, Week 199522 Derwent Publications Ltd., London, GB; Class A23, AN 1995-167389 XP002169077 & JP 07 090178 A (MITSUBISHI KASEI CORP), 4. April 1995 (1995-04-04)

## Beschreibung

Die Erfindung betrifft verstärkte, hoch gefüllte Polyamidformmassen mit verbessertem Verarbeitungsverhalten, erhöhter Fließfähigkeit, verbesserter Oberflächenqualität und guten thermischen Eigenschaften. Die erfindungsgemäßen Formmassen eignen sich zur Herstellung von Formkörpern, insbesondere mit großen Wandstärken oder anderen Halbzeugen oder Fertigteilen, die z.B. durch Extrusion, Extrusionsblasformen, Extrusionsstreckblasformen, Pultrusion, Spritzguß, Gasinnendrucktechnik (GIT)-Spritzguß, Spritzblasen, oder anderen Verformungstechniken herstellbar sind.

Die mit den erfindungsgemäßen Formmassen hergestellten Formkörper werden zur Herstellung von Innen- und Außenteilen, vorzugsweise mit tragender oder mechanischer Funktion im Bereich Elektro, Elektronik, Telekommunikation, Automobil, Transport, Verpackung, Haushalt, Möbel, Sport, Apparate- und Maschinenbau, Heizung, Klimatisierung, Sanitär eingesetzt.

Formmassen aus verstärkten Polyamid-Blends spielen eine zunehmende Rolle im Bereich der technischen Konstruktionswerkstoffe, die neben hoher Steifigkeit, Zähigkeit und Wärmeformbeständigkeit für Einsätze im Sichtbereich auch eine optimale Oberflächenqualität zeigen müssen. Außenteile, die der Bewitterung ausgesetzt sind, benötigen zusätzlich eine entsprechende Stabilität, um mehrere Jahre die notwendige Funktion zu gewährleisten.

Der besondere Vorteil von verstärkten Polyamiden liegt im außergewöhnlich guten Verbund zwischen Polymermatrix und Verstärkungsstoffen. Dadurch sind hohe Verstärkungsgrade, die zu hochsteifen Produkten führen, möglich, die aufgrund der niederen Schmelzviskosität teilkristalliner Polyamide im Spritzgießverfahren noch gut verarbeitbar sind.

Im folgenden sollen unter Polyamiden solche Polymere verstanden werden, bei denen die Monomereinheiten überwiegen, d.h. bis zu mindestens ca. 60 %, durch Amidbindungen, d.h. mit CO-NH-Bindungen, miteinander verknüpft sind und die aus Lactamen, Aminocarbonsäuren, oder Diaminen und Dicarbonsäuren aufgebaut sind. Geeignete Monomere für die Herstellung von Polyamiden sind: Caprolactam, Laurinlactam, Aminocapronsäure, Aminoundecansäure, Aminododecansäure, Diaminobutan, Hexamethylendiamin, Methylpentamethylendiamin, 3,3'-Dimethyl-4,4'-diaminodicyclohexylmethan (MACM), 1,6-Diamino-2,2,4-trimethylhexan, 1,6-Diamino-2,4,4-dimethylhexan, m-Xylylendiamin, p-Xylylendiamin, Nonandiamin, Decandiamin, Dodecandiamin, 2,2-Bis(p-aminocyclohexyl)propan, Bis(p-aminocyclohexyl)methan (PACM), Isphorondiamin, Polypropylenglykoldiamin, Norbonandiamin, 1,3-Bis(aminomethyl)-cyclohexan, TCD-Diamin, Bernsteinsäure, Glutarsäure, Adipinsäure, Azelainsäure, Sebazinsäure, Dodecandisäure, Dimersäure, Terephthalsäure, Isophthalsäure, Cyclohexandicarbonsäure, 2,6-Naphthalindicarbonsäure, tert-Butyl-isophthalsäure, Phenylindandicarbonsäure. Die Umsetzung der Säurechloride oder der Ester zu Polyamiden ist auch möglich, gebräuchlich ist die Polykondensation.

Die Kennzeichnung der Polyamide entspricht internationaler Norm ISO 1874-1, wobei die erste Ziffer die C-Atomzahl des Ausgangsamins und die letzte Ziffer die C-Atomzahl der Dicarbonsäure angeben. Wird nur eine Zahl angegeben, so bedeutet dies, daß von einer Aminocarbonsäure bzw. deren Lactam ausgegangen wird (vgl. H. Domininghaus, Die Kunststoffe und ihre Eigenschaften, VDI-Verlag 1976, S. 272).

Bei Polyamiden vom AA-BB-Typ wird dabei das Diamin immer an erster Stelle aufgeführt. Zum Beispiel wird das Polyamid aus Hexamethylendiamin und Sebacinsäure als Polyamid 610 (PA 610), das Polyamid aus Caprolactam als PA 6 bezeichnet.

Für aromatische oder cycloaliphatische Monomere gibt es teilweise spezielle Buchstabenkombinationen, so beispielsweise T für Terephthalsäure, I für Isophthalsäure.

Zur Charakterisierung von Copolyamiden werden die Komponenten in der Reihenfolge ihrer Mengenanteile durch Schrägstriche getrennt aufgeführt und die Mengenanteile in Klammern nachgestellt, z.B. Copolyamid 6/66/610 (50:30:20).

Das Zahlenmittel des Molekulargewichts der hier beschriebenen Polyamide, sollte über 5.000, vorzugsweise über 7.000 liegen.

Der Nachteil von verstärkten teilkristallinen Polyamidformmassen wie beispielsweise PA 66 liegt im starken Abfall der Steifigkeit durch Wasseraufnahme im Normklima. Verstärkte Polyamidformmassen (PA 66) führen aufgrund der hohen Schmelztemperatur und einer sehr hohen Kristallisationsgeschwindigkeit zu schlechten Oberflächen insbesondere bei Formteilen mit großer Wandstärke.

Hohe Anteile an Verstärkungsstoffen wie beispielsweise Glasfasern, in einer schnell erstarrenden PA 66-Polymermatrix, reduzieren die Fließfähigkeit beispielsweise bei der Spritzgießverarbeitung und führen zu reduzierter Oberflächenqualität. In diesen Fällen versucht man den Füllgrad niedrig zu halten und die Steifigkeit durch Verrippung zu erzielen.

Aus DE-A-17 69 040 (Dynamit Nobel AG) sind unverstärkte Formmassen aus teilkristallinen aliphatischen Polyamiden und amorphen Copolyamiden bekannt, die im Extruder vermischt werden.

In DE 26 42 244 C2 (Inventa AG) wird darauf hingewiesen, daß verstärkte Formmassen durch Extrusion von amorphen Copolyamiden des Typs MACMI/12 mit teilkristallinen aliphatischen Polyamiden hergestellt werden können, wodurch die mechanischen Eigenschaften verändert werden.

EP 70001 B2 (Du PONT) beschreibt unverstärkte und verstärkte Formassen auf der Basis teilkristalliner aliphatischer Polyamide und amorpher Polyamide, bestehend aus 40-98 Mol%-Einheiten Isopthalsäure, 2-60 Mol-% Einheiten Terephthalsäure, 50-98 Mol-%-Einheiten Hexamethylendiamin und 2-50 Mol-% Einheiten Bis-(p-aminocyclohexyl)-methan. Dadurch soll die Zähigkeit der Formmassen verbessert werden. Der Nachteil dieser Gemische besteht in der Gefahr, daß infolge von Phasenseparation Inhomogenitäten im Formkörper entstehen können.

Durch Zugabe von 30-95 Gew.-% amorpher Polyamide wie beispielsweise Hexamethylenisophthalamid PA 61 (DE 37 05 228 A1, EP 279 342 A1) (Bayer AG) zu verstärktem PA 66 werden verbesserte Fließeigenschaften in der Schmelze und erhöhte Reißdehnungen im Formteil gefunden. Gleichzeitig wird eine Verbesserung der Oberflächenqualität (DE 32 00 428 C2 (Bayer AG)) erzielt. Der Nachteil dieser Gemische besteht in der Gefahr, daß infolge von Phasentrennung Inhomogenitäten im Formkörper entstehen können. Ferner nimmt die Wärmeformbeständigkeit mit zunehmendem Anteil an PA 6I ab. Bei abnehmendem Anteil PA 6I nimmt die Differenz der Steifigkeiten im trocken und konditionierten Zustand wieder zu.

EP 400 428 A1 (BASF AG) handelt von Formmassen aus teilkristallinen, teilaromatischen Copolyamiden (6T/6), die mit amorphen Copolyamiden (6I/6T: 60/40 Gew.-%) extrudiert werden. Diese Formmassen zeigen zwar eine verbesserte Zähigkeit gegenüber reinem CoPA 6T/6 und PA 66, haben jedoch tiefe Schmelzpunkte im Vergleich zu CoPA 6T/6I. Ein Nachteil dieser Produkte besteht in einem starken Abfall der Steifigkeit nach Wasseraufnahme. Die tiefen Schmelzpunkte wirken sich außerdem auch nachteilig auf die Wärmeformbeständigkeit aus.

Ausgezeichnete Oberflächenqualitäten bei hohen Füllgraden (DE 43 21 247 C2 (Asahi)) werden erhalten, wenn aus den Bausteinen eines teilkristallinen Polyamids wie PA 66 (70-95 Gew.-%) und einem amorphen Polyamid wie PA 6I (5-30 Gew.%), ein Copolymerisat hergestellt wird, wie beispielsweise ein PA 66/6I. Die Konstanz der mechanischen Eigenschaften im trockenen und konditionierten Zustand ist unbefriedigend. Nachteilig wirkt sich die Absenkung des Schmelzpunktes auf die Wärmeformbeständigkeit, auch HDT (Heat Deflection Temperature) genannt, aus.

Verbesserte Fließfähigkeiten ohne negativen Einfluß auf die Zähigkeit, Steifigkeit und Wärmeformbeständigkeit können durch Zugabe von 4-8 Gew.-% eines PA-Präpolymeren bezogen auf den Anteil der Polymermatrix erhalten werden (DE 198 21 719 A1 (EMS-Inventa AG)). Als PA-Präpolymeres wird ein teilaromatisches PA des Typs 6T/6I der Zusammensetzung 70/30 Gew.-% mit relativen Viskositäten, gemessen in 0,5 %iger m-Kresollösung, von 1,01 bis 1,3 zu einer Polymermatrix aus PA 66, PA 66+PA 6I/6T (Blend) oder PA 12 eingesetzt. Trotz hoher Füllgrade von 50-70 % Glasfasern können die Fließlängen und Oberflächen der Formteile stark verbessert werden. Der Nachteil dieser Gemische besteht wieder in der Gefahr, daß infolge von Phasenseparation Inhomogenitäten im Formkörper entstehen können. Ferner zeigen Blends beispielsweise auf Basis PA 66 mit PA-Präpolymer noch starke Differenzen in der Steifigkeit im trockenen und konditionierten Zustand. Bei den in der DE 198 21 719 aufgeführten Blends zeigt sich jedoch ein niedriger HDT im Vergleich zu einem PA 6T/6I.

In DE 198 21 719 A1 (EMS-Chemie AG) wird beschrieben, daß durch Kombination von einem korrespondierenden Copolymer wie beispielsweise PA 66/6I/6T oder von PA 6/6I/6T und amorphes PA 6I/6T und PA-Präpolymer wie beispielsweise PA 6T/6I mit sehr niedriger Viskosität, Verbesserungen der Fließfähigkeit und der Oberflächenqualität möglich sind, ohne daß die Gefahr von Inhomogenitäten durch Entmischung der Blends im Formkörper besteht. Gleichzeitig kann durch geeignete Wahl der Komponenten HDT, Zähigkeit und Steifigkeit auf akzeptables Niveaus gebracht werden und der Einfluß der Wasseraufnahme beim Konditionieren reduziert werden. Insgesamt zeigt sich jedoch bei diesen Blends ein relativ niedriger HDT im Vergleich zu einem PA 6T/6I.

JP-A-7090178 (Mitsubishi) beschreibt Polyamidzusammensetzungen, die zu Formteilen, Folien und spritzgegossenen oder stranggepressten Teilen verarbeitet werden können. Diese Polyamidzusammensetzungen sollen nicht nur bei einer normalen, sondern auch bei hohen Temperaturen gute mechanische Eigenschaften, wie hohe Biegefestigkeiten besitzen. Die in JP-A-7090178 (Mitsubishi) beschriebenen Polyamidzusammensetzungen sollen aus 95 bis 25 Masseteilen eines kristallinen, aromatischen Polyamidharzes mit einer Schmelzenthalpie von mindestens 3 cal/g, welches aus Dicarbonsäure-Einheiten, die aus 30-100 Mol-% Terephthalsäure-Einheiten und 0-40 Mol-% anderen aromatischen Dicarbonsäure-Einheiten als Terephthalsäure-Einheiten und/oder 0-70 Mol-% aliphatischen Dicarbonsäure-Einheiten und aus aromatischen und/oder alicyklischen Alkylendiamin-Einheiten besteht und 5-75 Masseteilen eines nicht- oder niedrigkristallinen Polyamidharzes mit einer Schmelzenthalpie von höchstens 1 cal/g und 5-200 Masseteilen von anorganischen Fasern, bezogen auf 100 Masseteile des Polyamidharzes, bestehen. Durch Zusatz des kristallinen aromatischen Polyamidharzes anstelle eines kristallinen aliphatischen Polyamidharzes wird gemäß JP-A-7090178 zwar ein positiver Effekt auf die Biegefestigkeit und das Fließvermögen erzielt. Allerdings kann durch die Wahl dieser Komponente gemäß JP-A-7090178 nicht gleichzeitig der HDT, Zähigkeit, Steifigkeit und die Obeflächenqualität auf ein hohes Niveau gebracht werden. Bei höheren Anteilen der amorphen Komponente wird die Wärmeformbeständigkeit nämlich stark abgesenkt. Die mechanisch-thermischen Eigenschaften wie z.B. geringes Kriechen in feuchtem Zustand, können außerdem mit den Formmassen gemäß JP-A-7090178 nicht erfüllt werden.

EP 0 728 812 A1 (BASF AG) beschreibt thermoplastische Formmassen aus teilaromatischen, teilkristallinen Copolyamiden (A), sowie einem amorphen Copolyamid (B) aus 70 Gew.-% 61 und 30 Gew.-% 6T. Weiterhin können Füllstoffe, kautschukelastische Polymerisate und weitere zusätzliche Verarbeitungshilfsmittel in den Formmassen enthalten sein (Komponenten (C) bis (E)). Komponente (A) ist aus vier Komponenten aufgebaut, d. h. aus 30 bis 44 mol-% Einheiten, die sich von Terephthalsäure ableiten, 6 bis 20 mol-% Einheiten, die sich von Isophthalsäure ableiten, 43 bis 49,5 mol-% Einheiten, die sich von Hexamethylendiamin ableiten, und 0,5 bis 7 mol-% Einheiten, die sich von aliphatischen cyclischen Diaminen ableiten. EP 0 728 812 A1 will Blends bereit stellen, die ein verbessertes mechanisches Eigenschaftsniveau, wie Zähigkeitseigenschaften der daraus hergestellten Formkörper, aufweisen, für höhere Dauergebrauchstemperaturen einerseits einsetzbar sind und andererseits eine gute Lösungsmittel- und Ölbeständigkeit für den Einsatz aufweisen. Dies wird gemäß EP 0 728 812 A1 dadurch erzielt, dass zusätzlich zu den beschriebenen Komponenten in Komponente (A) noch spezielle, aliphatische, cyclische Diamine, nämlich Bis-(4-aminocyclohexyl)-methan oder Bis-(4-amino-3-methylcyclohexyl)-methan in Mengen von 1,4 bis 4 mol-% eingesetzt werden.

EP 0 532 963 A2 (BASD AG) beschreibt thermoplastische Formmassen, enthaltend 1 bis 18% (A) ein teilaromatisches Copolymerisat aus 65 bis 85 Gew.-Einheiten 6T und 15 bis 35 Gew.-Einheiten 61 und 22 bis 99% (B) verschiedenen teilkristallinen Polyamiden, wie PA 6, PA 12 sowie 0 bis 60% Glasfasern. EP 0 532 963 A2 will Formmassen zur Verfügung stellen, die neben einer guten Steifigkeit auch eine bessere Oberfläche (Oberflächenglanz) der Formkörper aufweist. Gemäß EP 0 532 963 A2 werden somit zwei teilkristalline Polyamide zusammengebracht.

In EP 1018534 A2 (Ube Industries) werden Polyamidharzzusammensetzungen mit verbesserter Bindenahtfestigkeit beschrieben. Die Polyamidzusammensetzungen enthalten 95-55 Gew.-% eines kristallinen, teilaromatischen Copolyamids mit einer aromatischen Monomereinheit (6T) und einem Schmelzpunkt von 260-320°C und/oder eines kristallinen, aliphatischen Polyamidharzes und 5-45 Gew.-% eines Polyamidharzes, enthaltend Einheiten, die abgeleitet sind von Xylylendiamin und Einheiten von einer aliphatischen Dicarbonsäure oder einer nichtkristallinen, teilaromatischen Polyamidharzzusammensetzung mit wenigstens 2 aromatischen Monomereinheiten. Die Polyamidzusammensetzung gemäß EP 1018534 A2 enthält weiterhin 5-200 Gewichtsteile eines anorganischen Füllstoffes. Nachteilig ist, daß die beschriebenen PA-Zusammensetzungen Glasübergangstemperaturen von nur bis zu 100°C aufweisen. Die zum Teil sehr tiefen Schmelzpunkte wirken sich insbesondere negativ auf die Wärmeformbeständigkeit aus. Die Konstanz der Eigenschaften im konditioniertem Zustand ist unbefriedigend.

Aufgabe der vorliegenden Erfindung ist es daher, verstärkte, hoch gefüllte thermoplastische Polyamidformmassen mit besserer Oberflächenqualität bereit zu stellen die gute mechanische und thermische Eigenschaften im Vergleich zu den oben beschriebenen Polyamid-Compounds des Standes der Technik zeigen.

Diese Aufgabe wird erfindungsgemäß durch die verstärkten, hoch gefüllten thermoplastischen Formmassen gemäß Anspruch 1 gelöst. Weiterhin wird die Aufgabe durch das Verfahren gemäß Anspruch 10, sowie durch die Verwendung gemäß Anspruch 12 gelöst.

In den Unteransprüchen sind vorteilhafte Ausführungsformen der Erfindung enthalten.

Die Erfinder der vorliegenden Anmeldung konnten nun bei PA6T/6I-Formmassen, hochgefüllt mit Glasfasern, feststellen, daß diese bei Formteilen mit langen Fließwegen eine schlechte und ungenügende Oberflächenqualität zeigen, welche sich insbesondere bei schwarz oder dunkel eingefärbten Formmassen in optisch sichtbaren Defekten, wie weißliche oder gräuliche Markierungen, (u.a. Beeinträchtigung der Farbentiefenwirkung) und/oder Faltenbildungen und /oder sogenannten "Tigerfellstrukturen", d.h. schuppenartige, nicht glatte Oberflächenstruktur äußert. Die Defekte können zudem die Lackierfähigkeit von Teilen stark beeinträchtigen und/oder zusätzlichen Aufwand bei Lackierungen erfordern, was insbesondere bei Formteilen in Kraftfahrzeugen nachteilig sein kann.

Die resultierende ungenügende Oberflächengüte des Formteils aus Formmassen aus Copolyamid 6T/6I läßt sich folgendermaßen erklären. Copolyamid 6T/6I (70/30) wird bei einer Massetemperatur von 340°C verarbeitet, der Schmelzpunkt liegt bei 325°C, die Masse bzw. Haut erstarrt in der Form bereits bei etwa 310°C. Hat die Haut des Teiles bereits während der Formfüllphase unter dem geringen Formfülldruck diese Erstarrungstemperatur erreicht, ist die exakte Kopie der Formoberfläche nicht mehr möglich. Dieses materialspezifische Verhalten ist schon bei "normalen" Spritzgußteilen erkennbar und wird bei großvolumigen GIT-Teilen oder Teilen mit langen Fließwegen noch deutlicher, da hier die Füllzeiten länger und die Drücke tiefer sind.

Die Möglichkeit, die Temperaturdifferenz zwischen Massetemperatur und Erstarrungstemperatur verarbeitungstechnisch zu vergrößern, sind allerdings begrenzt und ungenügend. Bei zu hohen Massetemperaturen von z.B. 345°C wird in der Regel ein Materialabbau festgestellt (Verweilzeitproblem); eine noch höhere Massetemperatur einzustellen erscheint daher nicht sinnvoll. Die Zeit bis zur Erstarrung der Schmelze bzw. der Haut kann durch eine hohe Formoberflächentemperatur verlängert werden. Ein Polyamid 6T/6I (70/30) reagiert hier gut und zeigt bessere Oberflächen bei sehr hohen Formtemperaturen wie 160°C, welche jedoch in der Praxis sich sehr oft nur schwer realisieren lassen.

Eine weitere Maßnahme, um die Oberfläche zu verbessern, ist eine möglichst hohe Einspritzgeschwindigkeit während der Formfüllphase. Der in der Form wirksame Druck ist dann höher und die Dauer bis zum Druckanstieg kürzer. Häufig aber sind bei großvolumigen Teilen die Maschinen an der Leistungsgrenze und es lassen sich keine Füllzeiten unter 1 Sekunde erreichen.

Bessere, schönere Oberflächen können auch durch eine Reduktion der Materialviskosität erzielt werden.

Die Reduktion der Viskosität läßt sich durch einen geringeren Polymerisationsgrad erreichen. Dadurch wird aber auch die Zähigkeit sehr stark verringert, was weniger gewünscht ist. Besser ist es daher, die Viskosität der Schmelze durch Zusätze, wie z.B. Gleitmittel zu verringern. Gleitmittel wirken zwar in der gewünschten Richtung, verschlechtern aber im Allgemeinen die Oberfläche. Besser sind daher tiefschmelzende und bei den erforderlichen Verarbeitungstemperaturen dünnflüssige Polymere wie PA 66 oder Polyamid 12, wobei jedoch die Wirkung begrenzt ist. Zusätze wie Präpolymere zeigen jedoch schon bessere Effekte (vgl. DE 198 21 719 (EMS-Inventa AG).

Überraschenderweise konnten die Erfinder der vorliegenden Erfindung nun feststellen, daß durch Zugabe von teilverträglichen amorphen Polyamiden, wie insbesondere Copolyamid 6I/6T, und besonders bevorzugt von einem Copolyamid 6I/6T (67/33) als Dryblend oder Compound in einer Menge von 8-15 Gew.-% zu einem teilkristallinen, teilaromatischen Copolyamid, und insbesondere einem Copolyamid 6T/6I (70/30) eine ausgezeichnete Oberflächenqualität bei den resultierenden Formteilen bei gleichzeitig guten mechanischen und akzeptablen thermischen Eigenschaften erzielt wird ohne daß zu sehr die Wärmeformbeständigkeit reduziert wird. Diese Eigenschaften konnten erfindungsgemäß ausschließlich mit Formmassen aus Polyamidzusammensetzungen erzielt werden, die 8-15 Gew.-% und insbesondere 10-15 Gew.-% eines nicht- oder niedrigkristallinen Copolyamids, wie es in Anspruch 1 als Komponente (B) spezifiziert wird, enthält. Zusätze von Komponente (B), die unterhalb des vorgenannten Mengenbereiches liegen, bewirken keine oder nur unwesentliche Oberflächenverbesserungen.

Besonders bevorzugt enthält die erfindungsgemäße Polyamidzusammensetzung auf Basis von teilkristallinen, teilaromatischen Copolyamiden auch als Komponente (A) in Anspruch 1 bezeichnet, 8-15 Gew.-% eines Copolyamid 6I/6T (67/33) (B). Die Erfinder konnten feststellen, daß höhere Anteile des amorphen Copolyamids (B) und insbesondere höhere Anteile an einem Copolyamid 6I/6T (67/33) zu einer starken Absenkung der Formbeständigkeit HDT/A und HDT/C (Heat Deflection Temperature) führen.

Erfindungsgemäß wird daher zum Zweck der genauen Abformung, z.B. im GIT-Verfahren oder in jedem anderen Verfahren auch, die Erstarrungsgeschwindigkeit und die Erstarrungstemperatur des teilkristallinen Copolyamids (A) durch eine Modifikation mit amorphen Copolyamid (B) reduziert, vorzugsweise mit einer Schmelze verträglichen/mischbaren Variante eines

Copolyamids PA 6I/6T (67/33), wie z.B. das Handelsprodukt Grivory ® G21 der Firma EMS-Chemie AG, Schweiz.

Sowohl das Copolyamid (A) als auch Copolyamid (B) enthalten ausschließlich Dicarbonsäuren, Terephthalsäure und Isophthalsäure, was zu besonders verträglichen Mischungen führt. Auch der Zusatz geringer Mengen Lactame oder Aminocarbonsäuren wie Caprolactam, Laurinlactam, Aminocapronsäure, Aminoundecansäure, Aminododecansäure sind möglich.

Die vorliegende Erfindung betrifft daher verstärkte, hoch gefüllte thermoplastische Polyamidformmassen, mit gleichzeitig guter Oberflächenqualität, gutem Fließverhalten und guter Wärmeformbeständigkeit, auf Basis von teilkristallinen, teilaromatischen Copolyamiden (A) mit Zusätzen von teilverträglichen, amorphen Copolyamid (B) in Mengen von 8 bis 15 Gew.-%, wobei die Copolyamide (A) als auch die Copolyamide (B) ausschließlich Terephthalsäure und Isophthalsäure als Dicarbonsäuren enthalten und die Polyamidformmassen aus den folgenden Komponenten (A) bis (D) und gegebenenfalls (E) bestehen:
(A) einem teilkristallinen, teilaromatischen Copolyamid mit einem Schmelzpunkt von 280 bis 350°C, aufgebaut aus
   (A₁) 50-80 Mol-% Einheiten von Terephthalsäure, bezogen auf den Gesamtgehalt an anwesenden Säuren,
   (A₂) 20-50 Mol-% Einheiten von Isophthalsäure, bezogen auf den Gesamtgehalt an anwesenden Säuren,
      wobei die Summe der Dicarbonsäure-Einheiten 100 Mol-% beträgt,
   (A₃) 100 Mol-% Einheiten mindestens eines linearen oder verzweigten aliphatischen Diamins mit 4-25 Kohlenstoff-Atomen,
   wobei in dem teilkristallinen, teilaromatischen Copolyamid der prozentuale Molgehalt an Phthalsäuren 100 % und der prozentuale Molgehalt an Diaminen 100 % ausmacht,
(B) 8-15 Gew.-% eines teilverträglichen nicht- oder niedrigkristallinen Copolyamids mit einer Schmelzenthalpie von höchstens 1 cal/g, aufgebaut aus
   (B₁) 55-100 Mol-% Einheiten von Isophthalsäure, bezogen auf den Gesamtgehalt an anwesenden Säuren,
   (B₂) 0-45 Mol-% Einheiten von Terephthalsäure, bezogen auf den Gesamtgehalt an anwesenden Säuren,
   (B₃) 100 Mol-% Einheiten mindestens eines linearen oder verzweigten aliphatischen oder alicyklischen Diamins mit 4-25 Kohlenstoff-Atomen, bezogen auf den Gesamtgehalt an anwesenden Aminen, wobei in dem nicht- oder niedrigkristallinen Copolyamid der prozentuale Molgehalt an Phthalsäuren 100 % und der prozentuale Molgehalt an Diaminen 100 % ausmacht,
(C) 25-70 Gew.-% eines faser- oder teilchenförmigen Füllstoffes oder deren Mischungen,
(D) 0-20 Gew.-% eines kautschukelastischen Polymerisates, und,
(E) gegebenenfalls bis zu 30 Gew.-%, bezogen auf das Gesamtgewicht der Komponenten (A) bis (D), üblicher Zusatzstoffe und Verarbeitungshilfsmittel.

Die Herstellung der teilkristallinen, teilaromatischen Copolyamide (A), die einen Schmelzpunkt von 280-350°C aufweisen und eine relative Viskosität, gemessen in 0,5%iger m-Kresollösung von zwischen 1,50 und 1,90, bevorzugt zwischen 1,55 und 1,65 haben, erfolgt nach bekannten kontinuierlichen 2-stufigen-Kondensationsverfahren.

Der Anteil des nicht- oder niedrigkristallinen Copolyamids (B) in der Polyamidmischung beträgt vorzugsweise 10-15 Gew.-%.

Das teilkristalline, teilaromatische Copolyamid (A) besteht in einer bevorzugten Ausführungsform aus 60-80 Mol-% Terephthalsäure, 20-40 Mol-% Isophthalsäure in äquimolaren Mengen mit Hexamethylendiamin.

Das nicht- oder niedrigkristalline Copolyamid (B) besteht aus 60-80 Mol-% Isophthalsäure, 20-40 Mol-% Terephthalsäure und 100 Mol-% Hexamethylendiamin, worin der mol-prozentuale Gehalt an Phthalsäuren 100 % und der mol-prozentuale Diamingehalt 100 % ausmachen.

Die Herstellung der amorphen Copolyamide (B) erfolgt nach bekannten Kondensationsverfahren für Polyamide nach dem Batch-Verfahren in Druckreaktoren.

Das nicht- oder niedrigkristalline Copolyamid (B) hat Werte für die relative Viskosität von 1,35-1,60, gemessen in 0,5%iger m-Kresollösung. In einer alternativen Ausführungsform kann als Copolyamid (B) ein Polyamid einer relativen Viskosität von 1,38-1,45, gemessen in 0,5%iger m-Kresollösung, eingesetzt werden.

Den erfindungsgemäßen Polyamidzusammensetzungen können aber auch präpolymere Polyamide mit relativen Viskositäten von 1,01-1,30 (gemessen in 0,5%iger m-Kresollösung) in Mengen von 0,1-20 Gew.-% zugegeben werden. Die präpolymeren Polyamide sind von gleicher Art wie die erfindungsgemäßen Polyamidformmassen. Als Monomerbausteine kommen erfindungsgemäß derjenigen Bausteine, die ganz oben näher definiert wurden, in Betracht. Die Herstellung der präpolymeren Polyamide erfolgt nach dem Verfahren, das in DE 198 21 719 (EMS-Inventa AG) beschrieben wird.

Das kristalline Copolymer (A) und das amorphe Copolyamid (B) können geeignete Regler enthalten, die dem Fachmann bekannt sind, um die Viskosität im gewünschten Bereich zu begrenzen. Vorzugsweise werden Monoamine und/oder Monocarbonsäuren wie z.B. Benzoesäure, Essigsäure eingesetzt.

Erfindungsgemäß besonders bevorzugt sind weiterhin Regler, wie 4-Amino-2,2,6,6-tetraalkylpiperidin oder 2,6-Dialkylphenole mit Methylamin oder Carboxylfunktionen oder Reglertypen, die ein oder mehrere dieser Gruppen enthalten.

Ferner können dem jeweiligen Polymerisationsansatz der Polymere (A) und (B) Verbindungen auf Basis von unterphosphoriger Säure, phosphoriger Säure oder Phosphorsäure oder Derivate der schwefeligen Säure, wie z.B. Sulfite, Thiosulfate, etc., zugegeben werden, sowie geeignete Antioxidantien wie beispielsweise sterisch gehinderte Hydroxyphenole.

Weiterhin können geeignete Entschäumer auf der Basis von Siliconen und Siliconderivaten im Polymerisationsansatz eingesetzt werden. Bevorzugt in Form stabiler wässriger Emulsionen mit Kieselsäuren.

Das erfindungsgemäße Copolymer (A) und das amorphe Copolyamid (B) weisen insbesondere einen niedrigen Triamingehalt auf. Dies kann dadurch bewerkstelligt werden, daß man bei dem Herstellungsprozeß die Verweilzeiten der Polymere sehr kurz und die Verfahrenstemperaturen relativ niedrig hält und so die Bildung von Triaminen weitgehend verhindert.

Wahlweise kann der Polymerisationsansatz geeignete Trenn- und Gleitmittel enthalten, wie beispielsweise Fettsäureester, Wachse oder Fettsäureamide.

Die erfindungsgemäßen Formmassen können 25-70 Gew.-% eines faser- oder teilchenförmigen Füllstoffes oder deren Mischungen enthalten. Besonders bevorzugt enthalten die Formmassen 50 Gew.-% eines Füllstoffes. Als Füllstoff werden insbesondere Glasfasern, wie Kurzglasfasem oder Rovings eingesetzt. Es können aber auch Glaskugeln, Glaspulver, Polymerfasern, Carbonfasern, Metallfasern oder Mineralstoffe wie Talkum, Kreide, Kaolin und Glimmer, Wollastonit und andere Silikate eingesetzt werden. Vorzugsweise enthält die erfindungsgemäße Polyamidformmasse als weiteren Zusatzstoff (E) bis zu 6 Gew.-% Ruß.

Als besonders wirksame Stabilisierung gegenüber Witterungseinflüsse kann Ruß in handelsüblicher Mastermatchform mit PA 12, PA 6, PA 66 oder Polyolefinen eingesetzt werden.

Selbstverständlich können als weitere Komponenten übliche Stabilisatoren, Gleitmittel, Farbstoffe, Pigmente, Metallflitter, Metallpigmente, gestanzte Metallflitter, Flammschutzmittel, Schlagzähmodifikatoren, Antistatika, Leitfähigkeitsadditive, Antibeschlagmittel, Entformungsmittel, optische Aufheller, Duftstoffe, Fungostatika, Oxidationsverzögerer und Wärmestabilisatoren, wie z.B. Halogenide von Metallen der Gruppe I des Periodensystems, z.B. Natrium-, Kalium-, Lithium-Halogenide, gegebenenfalls in Verbindung mit Kupfer-Halogeniden, den erfindungsgemäßen Formmassen zugesetzt werden.

Als Flammschutzmittel seien hier beispielsweise roter Phosphor, Polybromstyrole wie z.B. das Handelsprodukt Pyrocheck 68PB^{®} und die anderen für Polyamide bekannten Flammschutzmittel, wie Metallhydroxide, wie Mg(OH)₂, benannt. Im Falle des Einsatzes von halogenhaltigen Flammschutzmitteln empfiehlt es sich, einen Synergisten zu verwenden. Geeignet sind Verbindungen des Antimon, Bor und Zinn. Diese werden im allgemeinen in Mengen von 0,5-10 Gew.-%, bezogen auf die thermoplastischen Massen, verwendet.

Zur Herstellung der erfindungsgemäßen Formmassen können Ein- und vorzugsweise Zweiwellenextruder, die geeignete Förder- u. Knetelemente enthalten eingesetzt werden. Bevorzugt werden das teilkristalline und das amorphe Copolyamid mit den kleineren Additivmengen gemischt und in die Einzugszone des Extruders dosiert. Glasfasern werden über einen Sidefeeder, vorzugsweise möglichst nahe der Düse eingetragen.

Die Herstellung der Formteile, Halbzeuge, Extrudate oder Hohlkörper erfolgt auf handelsüblichen Anlagen. Geeignete Verarbeitungstemperaturen liegen zwischen 250 und 380 C. Wahlweise können Additive und einzelne Komponenten in der Form von geeigneten Masterbatch-Formulierungen direkt in der Verarbeitungsanlage zugegeben werden.

Als weitere Komponente (D) kann in den erfindungsgemäßen thermoplastischen Formmassen ein kautschukelastisches Polymerisat (Elastomer) in Mengen von bis zu 20 Gew.-%, vorzugsweise in Mengen 1-10 Gew.-%, enthalten sein. Nur beispielsweise seien als schlagzähmodifizierte Kautschuke (Elastomere) auf Ethylen-, Propylen-, Butadien oder Acrylatbasis und Mischungen dieser Monomeren genannt. Derartige Polymere sind dem Fachmann bekannt. Als Typ seien hier nur Schlagzähmodifikatoren vom Typ EP, EPDM, SEBS, SBS, SAN genannt.

Die erfindungsgemäßen Formmassen werden zur Herstellung von Hohlkörpern und Formteilen verwendet. Die Formteilen werden aus den erfindungsgemäßen Formmassen nach den bekannten Verfahren zur Umformung von Polymerschmelzen durch Extrusion, Extrusionsblasformen, Extrusionsstreckblasformen, Pultrusion, Spritzguß, Gasinnendrucktechnik (GIT)-Spritzguß, Spritzblasen oder anderen Verformungstechniken hergestellt.

Die mit den erfindungsgemäßen Formmassen hergestellten Formkörper werden zur Herstellung von Innen- und Außenteilen, vorzugsweise mit tragender oder mechanischer Funktion im Bereich Elektro, Elektronik, Telekommunikation, Automobil, Transport, Verpackung, Haushalt, Möbel, Sport, Apparate- und Maschinenbau, Heizung, Klimatisierung, Sanitär eingesetzt.

Folgende Beispiele sollen die Erfindung erläutern ohne sie jedoch einzuschränken.

### Beispiele

### Bestimmung der physikalischen Eigenschaften

Die Werte der relativen Viskosität wurden nach DIN 53727 bestimmt.

Die Bestimmung der mechanischen Eigenschaften erfolgt an trockenen Formkörpern nach ISO 527 (Zug-E-Modul, Reissfestigkeit, Reissdehnung) bzw. nach ISO 179/1eU (Schlagzähigkeit) bzw. nach ISO 179/1eA (Kerbschlagzähigkeit) bzw. nach ISO 75 (Formbeständigkeit HDT/A und HDT/C).

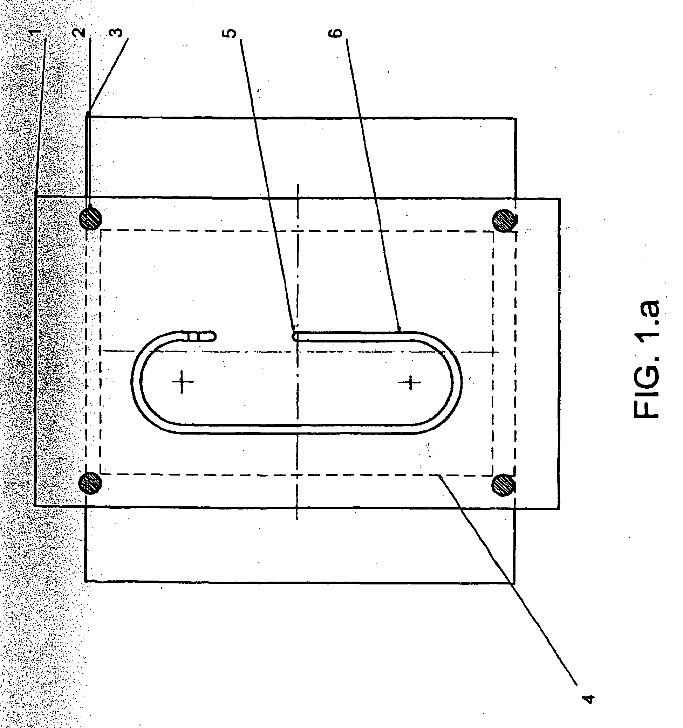

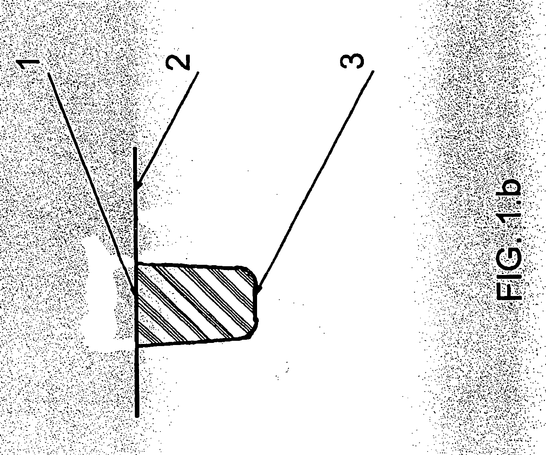

Die Beurteilung der Oberflächengüte von Formkörpern mit langen Fließwegen bzw. langen Zeiten für die Formgebung bei der Verarbeitung erfolgte exemplarisch an Fließspiralen mit der Spirallänge 1300mm und der Spiralquerschnittsfläche 400mm² (s. Figur 1.a und 1.b) nach werksinterner EMS-Chemie AG Norm.

### Erläuterungen zu den Beispielen

Die Formmassen wurden auf einem Zweiwellenextruder (Typ Werner und Pfleiderer ZSK25) hergestellt. Sämtliche Komponenten, mit Ausnahme der Glasfasern, wurden zuvor gemischt und in die Einzugszone dosiert. Die Glasfasern wurden über einen Sidefeeder (3 Gehäuseeinheiten vor der Düse) in die Schmelze dosiert.

Die Compoundierung erfolgte bei einer Schneckendrehzahl von 150U/min und einem Durchsatz von 10kg/h. Nach Abkühlen der Stränge im Wasserbad und Granulierung, erfolgte eine Trocknung bei 120°C vor einer weiteren Verarbeitung.

Formkörper für die Bestimmung der mechanischen und thermischen Materialeigenschaften wurden auf einer Spritzgiessmaschine (Typ Arburg Allrounder 320-210-750 Hydronica) bei einer Schneckendrehzahl von 250U/min hergestellt.

Die Formmassen wurden für die Herstellung der Fließspiralen auf einer Spritzgießmaschine (Typ Kraus Maffei KM 280-1650 B2) bei konstant gehaltenen Maschineneinstellungen, insbesondere konstante Zylindertemperaturen und Werkzeugtemperatur, aber mit unterschiedlichen Einspritzgeschwindigkeitsprofilen verarbeitet, die jeweils unterschiedlichen Einspritzzeiten entsprechen, um den Effekt der Formgebungszeit auf die Oberflächengüte zu ermitteln.

Die Einspritzzeiten von 1s, 3s bzw. 5s ergaben sich mit einer 60mm 3-Zonen-Standardschnecke aus den Einspritzgeschwindigkeiten von 200mm/s, 80mm/s bzw. 45mm/s mit jeweils abfallendem Geschwindigkeitsprofil am Fließwegende. Der jeweilige für die Formfüllung der Fließspirale benötigte Einspritzdruck (maximaler Einspritzdruck) wurde aufgezeichnet.

Die Fließspiralen wurden bzgl. der Oberflächengüte bewertet mit den Bewertungstufen 1 bis 6 (1: sehr gut, keinerlei optisch sichtbare Markierungen oder sonstige Defekte über die gesamte Spirallänge, 6: sehr schlecht, optisch sichtbare Markierungen und/oder "Tigerfellstruktur" über größere Bereiche und/oder Faltenbildung).

### Begriffserklärungen für nachfolgende Tabelle 1

| | |
|---|---|
| PA 6T/6I: | Handelsprodukt Arlen® A3000 (Hersteller: Mitsui Chemicals (J)), 70 Mol-% Terephtalsäure und 30% Mol-% Isophtalsäure als aromatische Dicarbonsäuren |
| | |
| | oder auch |
| | |
| | Handelsprodukt Grivory® HT XE 3733 NK (Hersteller: EMS-Chemie AG (CH)), 70 Mol-% Terephtalsäure und 30% Mol-% Isophtalsäure als aromatische Dicarbonsäuren |
| | |
| PA 6I/6T: | Handelsprodukt Grivory® G21 (Hersteller: EMS-Chemie AG (CH)), 67 Mol-% Isophtalsäure und 33% Mol-% Terephtalsäure als aromatische Dicarbonsäuren |
| | |
| PA 6T/66: | Handelsprodukt Arlen® C2000 (Hersteller: Mitsui Chemicals (J)), 55 Mol-% Terephtalsäure als aromatische Dicarbonsäure und 45% Mol-% Adipinsäure |
| | |
| | oder auch |
| | |
| | Handelsprodukt Grivory® HT XE 3774 NK (Hersteller: EMS-Chemie AG (CH)), 55 Mol-% Terephtalsäure als aromatische Dicarbonsäure und 45% Mol-% Adipinsäure |
| | |
| Russ: | Blackpearls® 880 der Firma Cabot |
| | |
| Glasfasern: | Schnittglas der Firma Vetrotex (Typ 955) |

### Ausführungsbeispiele 1 bis 4 (AB 1 bis AB4) (vgl. Tabelle 1)

Die Formmassen der Zusammensetzungen in Tabelle 1 wurden bei Zylindertemperaturen von 330°C compoundiert. Die Prüfkörperherstellung erfolgte bei Zylindertemperaturen von 325-340°C und einer Formtemperatur von 130°C. Die Fließspiralherstellung erfolgte bei Zylindertemperaturen von 330-340°C und einer Werkzeugtemperatur von 140°C.

Es werden Oberflächengüten bis zu Bewertungsstufe 2 (gut, kaum Markierungen sichtbar) erreicht, je nach Zusatzmenge PA 6I/6T. Die Formbeständigkeit HDT/A und HDT/C wird in einem noch akzeptablen Ausmaß reduziert bei nahezu unveränderten mechanischen Eigenschaften. Wesentlich höhere Anteile PA 6I/6T (höher als 15 Gew.-%) als in den Ausführungsbeispielen angeführt, verschlechtern die Wärmebeständigkeit insgesamt stark..

### Vergleichsbeispiel 1 (VB1) (vgl. Tabelle 1)

Die Formmasse der Zusammensetzung in Tabelle 1 wurde bei Zylindertemperaturen von 330°C compoundiert. Die Prüfkörperherstellung erfolgte bei Zylindertemperaturen von 325-340°C und einer Formtemperatur von 130°C. Die Fließspiralherstellung erfolgte bei Zylindertemperaturen von 330-340°C und einer Werkzeugtemperatur von 140°C.

Es wurde im Gegensatz zu den Ausführungsbeispielen kein PA 6I/6T eingesetzt. Die Oberflächengüten der Fließspiralen sind, aufgrund von optisch sichtbaren weisslichen Markierungen, "Tigerfellstruktur" über größere Bereiche und leichter Faltenbildung, als schlecht (Bewertungsstufe 4-5 bei 1s Einspritzzeit bzw. Bewertungsstufe 5 bei 3s Einspritzzeit) und deutlich schlechter als die Oberflächengüte für die Ausführungsbeispiele 1-4 einzustufen.

### Vergleichsbeispiele 2 und 3 (VB2 bis VB3) (vgl. Tabelle 1)

Die Formmassen der Zusammensetzungen in Tabelle 1, basierend auf PA 6T/66, wurden bei Zylindertemperaturen von 320°C compoundiert. Die Prüfkörperherstellung erfolgte bei Zylindertemperaturen von 315-330°C und einer Formtemperatur von 120°C. Die Fließspiralherstellung erfolgte bei Zylindertemperaturen von 320-330°C und einer Werkzeugtemperatur von 130°C.

Ohne Zusatz von PA 6I/6T wird nur eine sehr schlechte Oberflächengüte (Bewertungsstufe 6) erreicht, was mit der hohen Erstarrungsgeschwindigkeit von PA6T/66 zusammenhängen dürfte. Auch ein Zusatz von 10% PA 6I/6T verbessert nur unwesentlich die Oberflächengüte. Sie ist insgesamt nicht besser als mit Bewertungsstufe 5 (schlecht, optisch sichtbare Markierungen und "Tigerfellstruktur" über größere Bereiche und Faltenbildung) selbst bei der kürzesten Einspritzzeit von 1s einzustufen. Das schnelle Erstarrungsverhalten wird kaum messbar beeinflusst, vermutlich aufgrund ungenügender Verträglichkeit von PA 6T/66 zu PA 6I/6T. Es werden nicht annähernd ähnliche Effekte für die Oberflächengüte erzielt wie bei den Ausführungsbeispielen 1-4.

**Tabelle 1**

| Zusammensetzung Formmassen | | AB1 | AB2 | AB3 | AB4 | VB1 | VB2 | VB3 |
|---|---|---|---|---|---|---|---|---|
| PA6T/6I | Gew.-% | 41,7 | 39,7 | 37,7 | 35,7 | 49,7 | | |
| PA6T/66 | Gew.-% | | | | | | 49,7 | 39,7 |
| PA6I/6T | Gew.-% | 8 | 10 | 12 | 14 | | | 10 |
| Russ | Gew.-% | 0,3 | 0,3 | 0,3 | 0,3 | 0,3 | 0,3 | 0,3 |
| Glasfasern | Gew.-% | 50 | 50 | 50 | 50 | 50 | 50 | 50 |
| Maximaler Einspritzdruck bei 1s Einspritzzeit | bar | 1115 | 1150 | 1140 | 1110 | 1175 | 1795 | 1890 |
| Oberflächengüte bei 1s Einspritzzeit | Bewertungsstufe (1: sehr gut, 6: sehr schlecht) | 3-4 | 2-3 | 2 | 2 | 4-5 | 6 | 5 |
| Maximaler Einspritzdruck bei 3s Einspritzzeit | bar | 665 | 710 | 750 | 770 | 830 | 1415 | 1385 |
| Oberflächengüte bei 3s Einspritzzeit | Bewertungsstufe (1: sehr gut, 6: sehr schlecht) | 3-4 | 3-4 | 3 | 2 | 5 | 6 | 5 |
| Maximaler Einspritzdruck bei 5s Einspritzzeit | bar | 575 | 580 | | 590 | 600 | 1185 | 1140 |
| Oberflächengüte bei 5s Einspritzzeit | Bewertungsstufe (1: sehr gut, 6: sehr schlecht) | 4 | 3-4 | | 3 | 5 | 6 | 6 |
| Zug-E-Modul | MPa | 18000 | 18100 | 18200 | 17900 | 18200 | 17200 | 17500 |
| Reissfestigkeit | MPa | 265 | 265 | 265 | 265 | 260 | 245 | 250 |
| Reissdehnung | % | 2,2 | 2,2 | 2,1 | 2,1 | 2,1 | 2,3 | 2,2 |
| Schlagzähigkeit bei 23°C | kJ/m² | 95 | 90 | 95 | 90 | 87 | 85 | 80 |
| Schlagzähigkeit bei -23°C | kJ/m² | 80 | 84 | 85 | 83 | 80 | 55 | 60 |
| Kerbschlagzähigkeit bei 23°C | kJ/m² | 12 | 11 | 11 | 12 | 11 | 11 | 11 |
| Kerbschlagzähigkeit bei -30°C | kJ/m² | 12 | 11 | 11 | 11 | 11 | 11 | 12 |
| HDT/A (1.8 MPa) | °C | 280 | 272 | 270 | 263 | 290 | 287 | 276 |
| HDT/C (8 MPa) | °C | 185 | 170 | 165 | 145 | 218 | 240 | 212 |

### Bezugszeichenliste für Figur 1.a (Aufsicht Fliessspirale)

1: Aufspannplatte
2: Führungssäulen
3: Werkzeugaufspannplatte
4:Formplatte
5: Anbindung mit Heisskanal
6: Fliessspirale

### Bezugszeichenliste für Figur 1.b (Querschnitt Fliessspirale)

1: Düsenseite, poliert
2: Trennfläche
3: Aussenseite, strukturiert

## Patentansprüche

1. Verstärkte, hoch gefüllte thermoplastische Polyamidformmassen auf Basis von teilkristallinen, teilaromatischen Copolyamiden (A) mit Zusätzen von amorphen, teilverträglichen Copolyamiden (B) in Mengen von 8-15 Gew.-%,
wobei die Copolyamide (A) als auch die Copolyamide (B) ausschließlich Terephthalsäure und Isophthalsäure als Dicarbonsäuren enthalten und die Polyamidformmassen aus den folgenden Komponenten (A) bis (D) und gegebenenfalls (E) bestehen:
(A) einem teilkristallinen, teilaromatischen Copolyamid mit einem Schmelzpunkt von 280 bis 350°C, aufgebaut aus
(A₁) 50-80 Mol-% Einheiten von Terephthalsäure, bezogen auf den Gesamtgehalt an anwesenden Säuren,
(A₂) 20-50 Mol-% Einheiten von Isophthalsäure, bezogen auf den Gesamtgehalt an anwesenden Säuren,
wobei die Summe der Dicarbonsäure-Einheiten 100 Mol-% beträgt,
(A₃) 100 Mol-% Einheiten mindestens eines linearen oder verzweigten aliphatischen Diamins mit 4-25 Kohlenstoff-Atomen,
wobei in dem teilkristallinen, teilaromatischen Copolyamid der prozentuale Molgehalt an Phthalsäuren 100 % und der prozentuale Molgehalt an Diaminen 100 % ausmacht,
(B) 8-15 Gew.-% eines teilverträglichen nicht- oder niedrigkristallinen Copolyamids mit einer Schmelzenthalpie von höchstens 1 cal/g, aufgebaut aus
(B₁) 55-100 Mol-% Einheiten von Isophthalsäure, bezogen auf den Gesamtgehalt an anwesenden Säuren,
(B₂) 0-45 Mol-% Einheiten von Terephthalsäure, bezogen auf den Gesamtgehalt an anwesenden Säuren,
(B₃) 100 Mol-% Einheiten mindestens eines linearen oder verzweigten aliphatischen oder alicyklischen Diamins mit 4-25 Kohlenstoff-Atomen, bezogen auf den Gesamtgehalt an anwesenden Aminen, wobei in dem nicht- oder niedrigkristallinen Copolyamid der prozentuale Molgehalt an Phthalsäuren 100 % und der prozentuale Molgehalt an Diaminen 100 % ausmacht,
(C) 25-70 Gew.-% eines faser- oder teilchenförmigen Füllstoffes oder deren Mischungen,
(D) 0-20 Gew.-% eines kautschukelastischen Polymerisates,
(E) gegebenenfalls bis zu 30 Gew.-%, bezogen auf das Gesamtgewicht der Komponenten (A) bis (D), üblicher Zusatzstoffe und Verarbeitungshilfsmittel.

2. Polyamidformmassen gemäß Anspruch 1, **dadurch gekennzeichnet, daß** das aliphatische Diamin (A₃); (B₃) Hexamethylendiamin ist.

3. Polyamidformmassen gemäß Anspruch 1 oder 2, **dadurch gekennzeichnet, daß** sie 30-60 Gew.-% eines faser- oder teilchenförmigen Füllstoffes oder deren Mischungen enthalten,
wobei als Füllstoff Glasfasern bevorzugt sind.

4. Polyamidformmassen gemäß einem der Ansprüche 1 bis 3, **dadurch gekennzeichnet, daß** das nicht- oder niedrigkristalline Copolyamid in einer Menge von 10-15 Gew.-% in der Polyamidzusammensetzung enthalten ist.

5. Polyamidformmassen gemäß einem der vorher genannten Ansprüche 1 bis 4, **dadurch gekennzeichnet, daß** das teilkristalline, teilaromatische Copolyamid (A) aus
- 60-80 Mol-% Terephthalsäure,
- 20-40 Mol-% Isophthalsäure,
- 100 Mol-% Hexamethylendiamin,
worin der prozentuale Molgehalt an Phthalsäuren 100 % und der prozentuale Molgehalt an Diamin 100 % ausmachen.

6. Polyamidformmassen gemäß einem der Ansprüche 1 bis 54, **dadurch gekennzeichnet, daß** das nicht- oder niedrigkristalline Copolyamid (B) aus
- 60-80 Mol-% Isophthalsäure,
- 20-40 Mol-% Terephthalsäure,
- 100 Mol-% Hexamethylendiamin besteht,
worin der prozentuale Molgehalt an Phthalsäuren 100 % und der mol-prozentuale Diamingehalt 100 % ausmachen.

7. Polyamidformmassen gemäß einem der Ansprüche 1 bis 6, **dadurch gekennzeichnet, daß** sie präpolymere Polyamide der relativen Viskosität von 1,01-1,30 (gemessen in 0,5 % m-Kresol) in Mengen von 0,1-20 Gew.-% enthalten, wobei die präpolymeren Polyamide gleicher Art wie die Polyamidformmassen sind oder verschieden von der Art der Polyamidformmassen sind.

8. Polyamidformmassen gemäß einem der vorhergehenden Ansprüche 1 bis 7, **dadurch gekennzeichnet, daß** die Zusatzstoffe und Verarbeitungshilfsmittel ausgewählt sind aus der Gruppe der Kettenregler, der Stabilisatoren, der Kristallisationsmittel, der Weichmacher, der Farben, der Pigmente, der Antioxidantien, der Flammschutzmittel, der Antistatika, der Gleitmittel, der Entformungshilfsmittel, der Leitfähigkeitsadditive und der Metallpulver.

9. Polyamidformmassen gemäß einem der vorhergehenden Ansprüche, **dadurch gekennzeichnet, daß** sie als Zusatzstoff (E) bis zu 6 Gew.-% Ruß enthalten.

10. Verfahren zur Herstellung von Polyamidformmassen nach mindestens einem der Ansprüche 1 bis 9, **dadurch gekennzeichnet, daß** man die Bestandteile (A) bis (D) und gegebenenfalls (E) der Polyamidzusammensetzung in der Schmelze oder trocken mischt und gegebenenfalls den Polyamidformmassen in der Schmelze präpolymere Polyamide mit definierten Viskositäten und mit Anteilen von 0,1 bis 20 Gew.-% der Polyamidmatrix oder trocken zumischt, bei Verarbeitungstemperaturen von 250-380°C verarbeitet und austrägt.

11. Verfahren gemäß Anspruch 10, **dadurch gekennzeichnet, daß** man die Formmassen einer Nachkondensation unterwirft.

12. Verwendung der Polyamidformmassen nach mindestens einem der Ansprüche 1 bis 9 zur Herstellung von Formteilen wie Rohren, Hohlkörpern und anderen Halbzeugen oder Fertigteilen, insbesondere zur Herstellung von Tragstrukturen im Kraftfahrzeugbereich.

## Claims

1. Reinforced, highly filled thermoplastic polyamide moulding compositions based on partially crystalline, partially aromatic copolyamides (A), with additions of amorphous, partially compatible copolyamides (B) in quantities of 8 - 15 % by wt.,
wherein the copolyamides (A) and the copolyamides (B) exclusively contain terephthalic acid and isophthalic acid as dicarboxylic acids, and the polyamide moulding compositions comprise the following components (A) to (D) and possibly (E):
(A) a partially crystalline, partially aromatic copolyamide having a molten massing point of between 280 and 350° C, made up of
(A₁) 50-80 molar % units of terephthalic acid, relative to the total content of acids present,
(A₂) 20-50 molar % units of isophthalic acid, relative to the total content of acids present,
the sum of the dicarboxylic acid units amounting to 100 molar %, and
(A₃) 100 molar % units of at least one linear or branched aliphatic diamine having 4 - 25 carbon atoms,
the percentage molar content of phthalic acids totalling 100 % and the percentage molar content of diamines totalling 100 % in the partially crystalline, partially aromatic copolyamide,
(B) 8 - 15 % by wt. of a partially compatible non-crystalline or low-crystalline copolyamide having a maximum melting enthalpy of 1 cal/g, made up of
(B₁) 55 - 100 molar % units of isophthalic acid, relative to the total content of acids present,
(B₂) 0 - 45 molar % units of terephthalic acid, relative to the total content of acids present,
(B₃) 100 molar % units of at least one linear or branched aliphatic or alicyclic diamine having 4 - 25 carbon atoms, relative to the total content of amines present,
the percentage molar content of phthalic acids totalling 100 % and the percentage molar content of diamines totalling 100 % in the non-crystalline or low-crystalline copolyamide,
(C) 25 - 70 % by wt. of a fibrous or particulate filler substance or mixtures thereof,
(D) 0 - 20 % by wt. of a rubber-elastic polymeride, and
(E) possibly up to 30 % by wt., relative to the total weight of the components (A) to (D), of conventional additives and processing adjuvants.

2. Polyamide moulding compositions according to claim 1, **characterised in that** the aliphatic diamine (A₃); (B₃) is hexamethylene diamine.

3. Polyamide moulding compositions according to claim 1 or 2, **characterised in that** they contain 30 - 60 % by wt. of a fibrous or particulate filler substance or mixtures thereof, glass fibres being preferred as the filler substance.

4. Polyamide moulding compositions according to one of claims 1 to 3, **characterised in that** the non-crystalline or low-crystalline copolyamide is contained in the polyamide composition in a quantity of 10 - 15 % by wt..

5. Polyamide moulding compositions according to one of the previously mentioned claims 1 to 4, **characterised in that** the partially crystalline, partially aromatic copolyamide (A) comprises
- 60 - 80 molar % terephthalic acid,
- 20 - 40 molar % isophthalic acid,
- 100 molar % hexamethylene diamine,
the percentage molar content of phthalic acids totalling 100 %, and the percentage molar content of diamine totalling 100 %.

6. Polyamide moulding compositions according to one of claims 1 to 5, **characterised in that** the non-crystalline or low-crystalline copolyamide (B) comprises
- 60 - 80 molar % isophthalic acid,
- 20 - 40 molar % terephthalic acid,
- 100 molar % hexamethylene diamine,
the percentage molar content of phthalic acids totalling 100 %, and the molar percentage diamine content totalling 100 %.

7. Polyamide moulding compositions according to one of claims 1 to 6, **characterised in that** they contain prepolymeric polyamides of the relative viscosity of 1.01 - 1.30 (measured in 0.5 % m-cresol) in quantities of 0.1 - 20 % by wt., the prepolymeric polyamides being of the same type as the polyamide moulding compositions or being different from the type of polyamide moulding compositions.

8. Polyamide moulding compositions according to one of the preceding claims 1 to 7, **characterised in that** the additives and processing adjuvants are selected from the group of chain regulators, stabilisers, crystallisation agents, plasticisers, dyes, pigments, antioxidants, fireproofing agents, antistatic agents, lubricants, mould-release adjuvants, conductivity additives and metal powders.

9. Polyamide moulding compositions according to one of the preceding claims, **characterised in that** they contain up to 6 % by wt. carbon black as the additive (E).

10. Method of producing polyamide moulding compositions according to at least one of claims 1 to 9, **characterised in that** the constituent ingredients (A) to (D) and possibly (E) of the polyamide composition are mixed in the molten mass or dry, and prepolymeric polyamides with specific viscosities and with proportions of between 0.1 and 20 % by wt. of the polyamide matrix are possibly admixed to the polyamide moulding compositions in the molten mass or dry, processed at processing temperatures of 250 - 380° C and discharged.

11. Method according to claim 10, **characterised in that** the moulding compositions are subjected to subsequent condensation.

12. Use of the polyamide moulding compositions according to at least one of claims 1 to 9 for the production of moulded parts such as pipes, hollow bodies and other semi-finished articles or finished parts, more especially for the production of supporting structures in the automotive vehicle sector.

## Revendications

1. Matières moulables en polyamide thermoplastiques renforcées hautement chargées à base de copolyamides partiellement aromatiques partiellement cristallins (A) avec des ajouts de copolyamides amorphes partiellement compatibles (B) en des quantités allant de 8 à 15% en poids, les copolyamides (A) de même que les copolyamides (B) contenant exclusivement de l'acide téréphtalique et de l'acide isophtalique comme acides dicarboxyliques et les matières moulables en polyamide étant constituées des composants (A) à (D) et le cas échéant (E) suivants :
(A) un copolyamide partiellement aromatique partiellement cristallin ayant un point de fusion de 280 à 350°C, composé de
(A₁) 50 à 80% en moles de motifs acide téréphtalique, ramenés à la teneur totale des acides présents,
(A₂) 20 à 50% en moles de motifs acide isophtalique, ramenés à la teneur totale des acides présents,
la somme des motifs acides dicarboxyliques étant égale à 100% en moles,
(A₃) 100% en moles de motifs d'au moins une diamine aliphatique linéaire ou ramifiée ayant de 4 à 25 atomes de carbone,
le pourcentage en moles des acides phtaliques contenus dans le copolyamide partiellement aromatique partiellement cristallin étant égal à 100% et le pourcentage en moles des diamines égal à 100%,
(B) 8 à 15% en poids d'un copolyamide non cristallin ou faiblement cristallin partiellement compatible ayant une enthalpie de fusion maximale de 1 cal/g, composé de
(B₁) 55 à 100% en moles de motifs acide isophtalique, ramenés à la teneur totale des acides présents,
(B₂) 0 à 45% en moles de motifs acide téréphtalique, ramenés à la teneur totale des acides présents,
(B₃) 100% en moles de motifs d'au moins une diamine aliphatique ou alicyclique linéaire ou ramifiée ayant de 4 à 25 atomes de carbone, ramenés à la teneur totale des amines présentes,
le pourcentage en moles des acides phtaliques contenus dans le copolyamide non cristallin ou faiblement cristallin étant égal à 100% et le pourcentage en moles des diamines égal à 100%,
(C) 25 à 70% en poids d'une matière de charge sous forme de fibres ou de particules, ou de mélanges de celles-ci,
(D) 0 à 20% en poids d'un polymère caoutchoutique,
(E) le cas échéant jusqu'à 30% en poids, ramenés au poids total des composants (A) à (D), d'additifs et d'auxiliaires de transformation usuels.

2. Matières moulables en polyamide selon la revendication 1, **caractérisées en ce que** la diamine aliphatique (A₃) ; (B₃) est la 1-hexaméthylène diamine.

3. Matières moulables en polyamide selon la revendication 1 ou la revendication 2, **caractérisées en ce qu'**elles contiennent de 30 à 60% en poids d'une matière de charge sous forme de fibres ou de particules, ou de mélanges de celles-ci, les fibres de verre étant préférées en tant que matière de charge.

4. Matières moulables en polyamide selon l'une des revendications 1 à 3, **caractérisées en ce que** le copolyamide non cristallin ou faiblement cristallin est présent en une quantité de 10 à 15% en poids dans la composition de polyamide.

5. Matières moulables en polyamide selon l'une des revendications 1 à 4 précédentes, **caractérisées en ce que** le copolyamide partiellement aromatique partiellement cristallin (A) se compose de
- 60 à 80% en moles d'acide téréphtalique,
- 20 à 40% en moles d'acide isophtalique,
- 100% en moles d'hexaméthylène diamine,
le pourcentage en moles des acides phtaliques étant égal à 100% et le pourcentage en moles de la diamine égal à 100%.

6. Matières moulables en polyamide selon l'une des revendications 1 à 5, **caractérisées en ce que** le copolyamide non cristallin ou faiblement cristallin (B) se compose de
- 60 à 80% en moles d'acide isophtalique,
- 20 à 40% en moles d'acide téréphtalique,
- 100% en moles d'hexaméthylène diamine,
le pourcentage en moles des acides phtaliques étant égal à 100% et le pourcentage en moles de la diamine égal à 100%.

7. Matières moulables en polyamide selon l'une des revendications 1 à 6, **caractérisées en ce qu'**elles contiennent des polyamides prépolymères ayant une viscosité relative de 1,01 à 1,30 (mesurée dans du m-crésol à 0,5%) en des quantités allant de 0,1 à 20% en poids, les polyamides prépolymères étant de même nature que les matières moulables en polyamide ou d'une nature différente de celle des matières moulables en polyamide.

8. Matières moulables en polyamide selon l'une des revendications 1 à 7 précédentes, **caractérisées en ce que** les additifs et les auxiliaires de transformation sont choisis dans le groupe comprenant des agents d'ajustement de chaîne, des agents stabilisateurs, des agents de cristallisation, des plastifiants, des colorants, des pigments, des antioxydants, des agents ignifugeants, des agents antistatiques, des agents antifriction, des auxiliaires de démoulage, des additifs de conductibilité et des poudres métalliques.

9. Matières moulables en polyamide selon l'une des revendications précédentes, **caractérisées en ce qu'**elles contiennent jusqu'à 6% en poids de noir de fumée en tant qu'additif (E).

10. Procédé de production de matières moulables en polyamide selon l'une au moins des revendications 1 à 9, **caractérisé en ce que** l'on mélange les constituants (A) à (D) et le cas échéant (E) de la composition de polyamide en fusion ou à sec et, le cas échéant, on incorpore dans les matières moulables en polyamide, en fusion ou à sec, des polyamides prépolymères ayant des viscosités définies en des proportions allant de 0,1 à 20% en poids, ramenées à la matrice de polyamide, on les transforme à des températures de transformation allant de 250 à 380°C et on les défourne.

11. Procédé selon la revendication 10, **caractérisé en ce que** l'on soumet les matières moulables à une post-condensation.

12. Utilisation des matières moulables en polyamide selon l'une au moins des revendications 1 à 9 pour fabriquer des pièces moulées telles que des tubes, des corps creux et d'autres demi-produits ou pièces finies, en particulier pour fabriquer des structures portantes dans le secteur automobile.
